Europäisches Patentamt

European Patent Office

Office européen des brevets

(11) Veröffentlichungsnummer: **0 300 141 B1**

(12) **EUROPÄISCHE PATENTSCHRIFT**

(45) Veröffentlichungstag der Patentschrift: **15.07.92**

(51) Int. Cl.⁵: $H01B$ **13/00**

(21) Anmeldenummer: **88106718.5**

(22) Anmeldetag: **27.04.88**

---

(54) **Einrichtung für eine vollautomatische Kabelbaumherstellung.**

---

(30) Priorität: **20.07.87 CH 2738/87**

(43) Veröffentlichungstag der Anmeldung:
**25.01.89 Patentblatt 89/04**

(45) Bekanntmachung des Hinweises auf die
Patenterteilung:
**15.07.92 Patentblatt 92/29**

(84) Benannte Vertragsstaaten:
**DE FR GB IT**

(56) Entgegenhaltungen:
**EP-A- 0 008 155**
**EP-A- 0 062 413**

(73) Patentinhaber: **KOMAX AG**
**Industriestrasse**
**CH-6036 Dierikon-Luzern(CH)**

(72) Erfinder: **Koch, Max, Dipl.-Elektro-Ing. ETH**
**Ebnetrain 6**
**CH-6045 Meggen(CH)**

(74) Vertreter: **Reichmuth, Hugo Werner**
**INVENTIO AG Seestrasse 55**
**CH-6052 Hergiswil/NW(CH)**

**Beschreibung**

Die Erfindung betrifft eine Einrichtung für eine vollautomatische Kabelbaumherstellung, bestehend aus einem Werktisch mit einem darauf aufgebauten, durch eine elektronische Steuereinheit gesteuerten Industrieroboter, welcher einen Schwenkarm mit einem Greifer zum Aufnehmen von Werkzeugen für die Verlegung von Kabelverbindungsteilen aufweist, aus mindestens einem am Werktisch angeordneten Magazin für die automatische Zuführung von Kabelverbindungsteilen, aus einer Vorrichtung für die Zuführung von Kabelsträngen, aus einer Einrichtung für die Halterung der Kabelverbindungsteile auf dem Werktisch, aus einer elektrischen Kabelbaum-Prüfeinrichtung und aus einer Kabelbaum-Transport- und- Sortiereinrichtung.

Eine solche Einrichtung für die Herstellung von Kabelbäumen ist mit der internationalen PCT-Patentanmeldung Nr. WO 86/05038 bekanntgeworden. Bei dieser Erfindung werden mit Hilfe eines Industrieroboters serienweise mehradrige Flachkabel beliebiger Länge an beiden Enden mit Klemmvorrichtungen versehen und so zu Kabelbäumen verarbeitet. Sofort anschliessend an die Fabrikation wird jeder Kabelstrang einer elektrischen Prüfung unterzogen und dann über ein Transportband und eine entsprechend dem Prüfergebnis umsteuerbare, kippbar gelagerte Rutschbahn in einen entsprechenden Transportbehälter geleitet.

Der Nachteil dieser Einrichtung liegt darin, dass Flachkabel oder einzelne Kabelstränge lediglich in einer einzigen, fortlaufenden Richtung verlegt und zu Kabelsträngen gefertigt werden können. Die Fertigung von Kabelbäumen mit mehr als zwei Klemmvorrichtungen sind mit der offenbarten Einrichtung nicht möglich.

Aus der EP-A-0 062 413 ist eine Einrichtung zur vollautomatischen Kabelbaumherstellung bekannt, bei der ein Verlegebrett und eine über dem Verlegebrett liegende, Aussparungen für die verwendeten Verlegehilfen aufwiesende Abstreifplatte verwendet sind. In dieser genannten Einrichtung werden Kabelstränge mittels des Greifers eines elektronisch gesteuerten Roboters verlegt. Zudem wird eine Ablängvorrichtung eingesetzt. In dieser EP-A-0 062 413 wird die als an sich bekannt bezeichnete Verwendung verschiedener, austauschbarer Verlegebretter als nachteilig angesehen und daher eine Verlegehilfen-Bestückung der verwendeten dreilagigen Werktisch-Verlegebrett-Anordnung durch den Roboter-je nach gewünschtem Kabelbaum-beschrieben.

Der Erfindung liegt die Aufgabe zugrunde, eine Einrichtung für eine vollautomatische Kabelbaumherstellung vorzuschlagen, welche Kabelbäume mit beliebigen Abzweigungen und mehr als zwei Kabelverbindungsteilen mit Schneidklemmverbindungen herstellen kann.

Diese Aufgabe wird durch die im Anspruch 1 definierte Erfindung gelöst.

Die durch die Erfindung erreichten Vorteile sind im wesentlichen darin zu sehen, dass Kabelbäume mit beliebigen Abzweigungen und Verbindungsteilen vollautomatisch herstellbar sind, dass eine sofortige elektrische Kontrolle jeden Kabelbaumes auch mit beliebigen Kabelabzweigungen und eine vollautomatische Wegführung des fertig erstellten Kabelbaumes, trotz einer Vielzahl von behindernden Verlegehilfen ohne die Tätigkeit einer Hilfsperson möglich sind.

In beiliegender Zeichnung ist ein Ausführungsbeispiel der Erfindung dargestellt, das im folgenden näher erläutert wird. Es zeigen:

Fig. 1 eine Seitenansicht einer kompletten Einrichtung für die vollautomatische Kabelbaumherstellung,

Fig. 2 einen Grundriss der Einrichtung gemäss Fig. 1,

Fig. 3 einen Längsschnitt durch ein auf den Werktisch aufsetzbares Verlegebrett, zusammen mit einer zugehörigen Abstreiferplatte und

Fig. 4 einen Grundriss des Verlegebrettes mit Aussparungen für die Befestigung verschiedener Verlegehilfen.

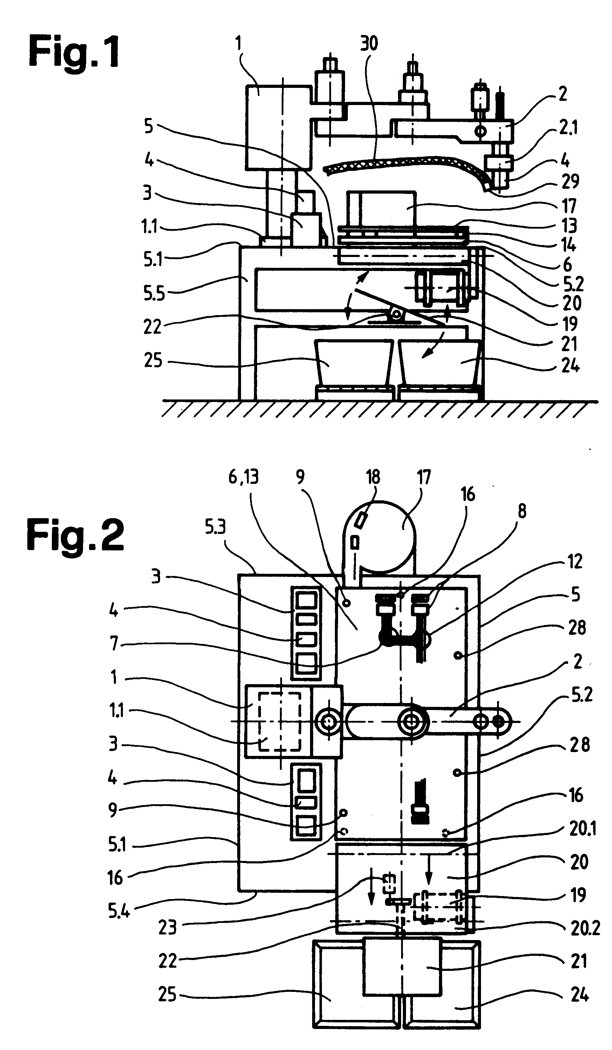

In den Fig. 1 und 2 ist ein Industrieroboter mit der Ziffer 1 bezeichnet. Der Industrieroboter 1 ist mit einem Fuss 1.1 auf einem Werktisch 5 am Rande der einen Längsseite ungefähr mittig angeordnet und weist einen Schwenkarm 2 auf. Auf beiden Seiten des Fusses 1.1 des Industrieroboters 1 sind Magazine 3 für die Aufnahme von verschiedenen Werkzeugen 4 für die Herstellung von Kabelbäumen 12 vorgesehen. Im Arbeitsbereich des Schwenkarmes 2 des Industrieroboters 1 ist auf dem Werktisch 5 ein Verlegebrett 6 mit fest angeordneten Verlegehilfen 7 und Aufnahmehalterungen 8 für die Aufnahme von Kabelverbindungsteilen 18 aufgelegt, wobei am Werktisch 5 zwei Positionszapfen 9 mit konischem Führungsansatz 9.1, zwei an dem Verlegebrett 6 angeordnete zylindrische Aussparungen 6.2 für die genaue Positionierung des Verlegebrettes 6 aufnehmen. Unter dem Verlegebrett 6 sind in der Höhe einstellbare Positionsfüsse 11 angeordnet, durch welche eine für eine einwandfreie Verlegung der Kabel erforderliche genaue Arbeitshöhe des Verlegebrettes 6 einstellbar ist. Jede Aufnahmehalterung 8 für die Kabelverbindungsteile 18 wird mit entsprechenden festen Anschlüssen zu einer Kontrolleinheit für eine sofortige elektrische Überprüfung des Kabelbaumes 12 versehen, wobei Kontaktbrücken zu den in die Schneidklemmverbindungen der von den Aufnahmehalterungen 8 festgehaltenen Kabelverbindungsteile 18 eingelegten und eingepressten Kabeln die Verbindung herstellen. Auf dem Verlegebrett 6 ist eine Abstreiferplatte 13 mit zum Verlegebrett 6 genau passenden Ausschnitten für die Verlegehilfen 7 und die Aufnahmehalterungen 8 für die Kabelverbindungsteile 18 aufgelegt, durch welche die Verlegehilfen 7 und die von den Aufnahmehalterungen 8 festgehaltenen Kabelverbindungsteile 18 für die Bildung des Kabelbaumes 12 hindurchragen. Die Abstreiferplatte 13 ragt auf beiden Schmalseiten leicht über das Verlegebrett 6 hinaus, wird beispielsweise durch vertikale, am Verlegebrett 6 angeordnete Positionsstifte 28 in einer genauen Lage zentriert, und liegt auf dem Verlegebrett 6 auf. Am Rahmen 5.5 des Werktisches 5 sind beispielsweise drei pneumatische Kolben-Zylindereinheiten 15 befestigt, deren zylindrische Hubkolben 16 seitlich neben dem Verlegebrett 6 unter die vorstehende Abstreiferplatte 13 greifen. Auf der einen Schmalseite 5.3 des Werktisches 5 ist ein Magazin 17 mit einer automatischen Zufuhreinrichtung für Kabelverbindungsteile 18 und auf der anderen Schmalseite 5.4 direkt anschliessend an das Verlegebrett 6 und die Abstreiferplatte 13 ein durch einen Transportbandantrieb 19 antreibbares Transportband 20 für die Wegführung der fertigen Kabelbäume 12 vorgesehen, wobei das Transportband 20 mit einer ersten Umlenkwalze 20.1 am Verlegebrett anschliesst. Unter der zweiten Umlenkwalze 20.2 des Transportbandes 20 schliesst eine über das Transportband 20 und das Ende des Werktisches 5 hinausragende Wippe 21 an, welche um eine ungefähr in der Mitte der zweiten Umlenkwalze am Rahmen 5.5 des Werktisches 5 angeordnete, horizontal und in der Bewegungsrichtung des Transportbandes 20 verlaufende Mittelachse 22 kippbar gelagert ist. Mit Hilfe eines vom elektrischen Prüfergebnis abhängig gesteuerten Kippantriebes 23 wird die Wippe 21 in die eine oder in die andere Richtung geneigt. Unter der Wippe 21 befinden sich nebeneinander zwei Aufnahmebehälter 24, 25, der eine für die als gut befundenen Kabelbäume 12, der andere für den Ausschuss. Die andere dem Industrieroboter gegenüberliegende Längsseite 5.2 des Werktisches 5 ist zugangsfrei und dafür vorgesehen, die diversen Verlegebretter 6 mit den zugehörigen Abstreiferplatten 13 mit einer nicht dargestellten Transporthilfe von einem Lagerplatz auf den Werktisch 5 aufzusetzen. Zu diesem Zweck sind an den beiden Schmalseiten des Verlegebrettes 5 je die beiden vorstehenden Traglappen 14 angeordnet. An einem für die Entriegelung der Kabelverbindungsteile 18 vorgesehenen Werkzeug 4 ist eine mit einer Absaugvorrichtung 30 verbundene Düse 29 zum Absaugen von Arbeitsrückständen festgemacht.

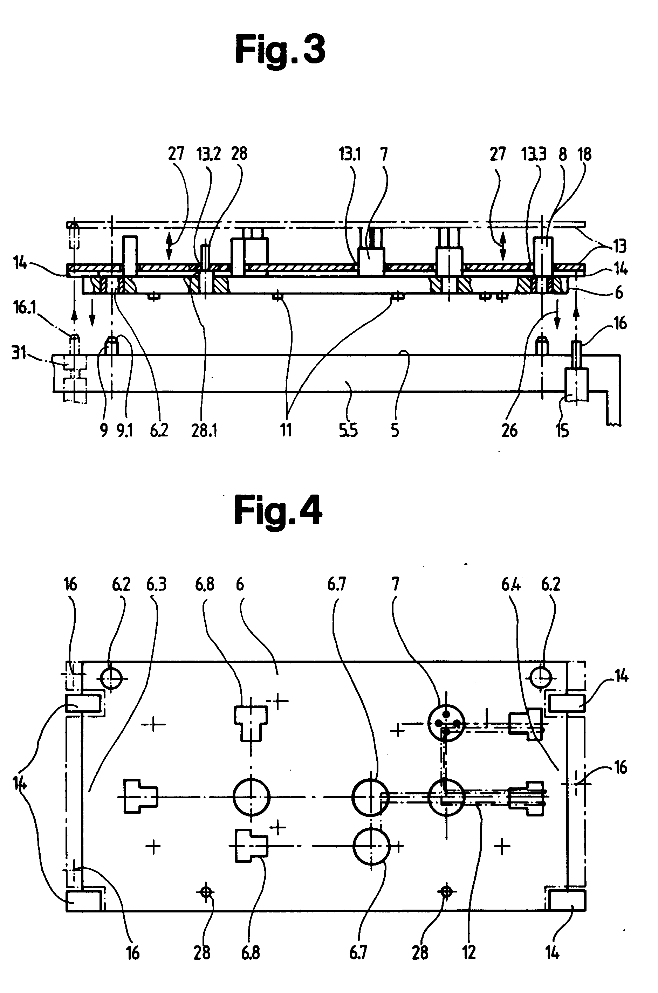

In den Fig. 3 und 4 ist das Verlegebrett 6 grösser dargestellt. Das Verlegebrett 6 wird in der Pfeilrichtung 26 auf die zwei auf dem Werktisch 5 angeordneten zylindrischen Positionszapfen 9 mit konischem Führungsansatz 9.1 aufgelegt. Im Verlegebrett 6 sind zu diesem Zweck entsprechende zylindrische Aussparungen 6.2 und unter dem Verlegebrett 6 in der Höhe einstellbare Positionsfüsse 11 vorgesehen. An den beiden Schmalseiten 6.3, 6.4 des Verlegebrettes 6 sind je zwei vorstehende Traglappen 14 angeordnet, welche als Transporthilfe dienen. Das Verlegebrett 6 weist eine Anzahl Aussparungen auf, grosse runde Aussparungen 6.7 mit je vier nicht dargestellten Gewindelöchern für die Befestigung der Verlegehilfe 7 jeweils an einer Stelle wo einzelne Kabel für die Bildung eines Kabelbaumes 12 eine Richtungsänderung erfahren, weitere Aussparungen 6.8 je mit einer Anzahl ebenfalls nicht dargestellter Befestigungslöchern für die Aufnahme und die Befestigung der Aufnahmehalterung 8 für die Aufnahme der Kabelverbindungsteile 18, sowie die beiden bereits oben erwähnten Aussparungen 6.2 für die Aufnahme der Positionszapfen 9. Dazu sind mindestens zwei gegen oben vorstehende Positionsstifte 28 für die Zentrierung der auf das Verlegebrett 6 auflegbaren Abstreiferplatte 13 vorgesehen. Die auf das Verlegebrett 6 aufgelegte Abstreiferplatte 13 weist ebenfalls Aussparungen 13.1, 13.3 auf, welche teilweise deckungsgleich zu den Aussparungen 6.7, 6.8 des Verlegebrettes 6 angeordnet sind und durch welche die Verlegehilfe 7 und die Aufnahmehalterungen 8 berührungslos hindurchragen. Mindestens zwei weitere Aussparungen 13.2 dienen zur Aufnahme der am Verlegebrett befestigten Positionsstifte 28. Mit Hilfe der Hubkolben kann die Abstreiferplatte 13 in der Pfeilrichtung 27 AUF- und AB-bewegt werden und zwar von einer auf dem Verlegebrett 6 aufliegenden Ruhelage in eine die Verlegehilfen 7 überragende Arbeitslage (strichpunktiert dargestellt).

Die vorstehend beschriebene Einrichtung arbeitet wie folgt: Mit einer nicht dargestellten Transporthilfe wird ein für die Fertigung eines bestimmten Kabelbaumes 12 vorgefertigtes Verlegebrett 6 mit einer zugehörigen Abstreiferplatte 13 auf den Werktisch 5 aufgesetzt. Ein nicht dargestelltes gabelförmiges Tragelement, beispielsweise eines Staplers, untergreift an beiden Schmalseiten 6.3, 6.4 des Verlegebrettes 6 die vier vorstehenden Traglappen 14 und setzt das Verlegebrett 6 komplett mit allen Zubehörteilen wie Verlegehilfen 7, Aufnahmehalterungen 8, den nötigen Kontrollverdrahtungen und der Abstreiferplatte 13 auf den Werktisch 5 auf, wobei die auf dem Werktisch 5 vorhandenen Positionszapfen 9 das Verlegebrett 6 ganz genau positionieren. Der Greifer 2.1 des Schwenkarmes 2 des für das aufgesetzte Verlegebrett 6 entsprechend programmierten Industrieroboters 1 entnimmt vom Werkzeugmagazin 3 ein Verlegewerkzeug 4, mit dem er von dem Magazin 17 mit der automatischen Zufuhreinrichtung für Kabelverbindungsteile 18 mit Schneidklemmverbindungen ein erstes Kabelverbindungsteil 18 ergreift und es in eine der entsprechenden Aufnahmehalterungen 8 des Verlegebrettes 6 ein setzt. Dann wird ein zweites Kabelverbindungsteil 18 gefasst und eingesetzt, dann ein drittes usw., bis alle Aufnahmehalterungen 8 mit Kabelverbindungsteilen 18 ausgerüstet sind. Das Verlegewerkzeug 4 für die Kabelverbindungsteile 18 wird im Magazin 3 wieder deponiert und ein weiteres Werkzeug zum Verlegen und Ablängen eines gewünschten Kabels wird vom Greifer 2.1 des Schwenkarmes 2 ergriffen. Das Kabel-Verlegewerkzeug ist mit einem Kabel-Vorrat verbunden und weist ein Vorschubmodul zum Verschieben des Kabels, ein Ablängmodul zum Ablängen des Kabels, ein Überwachungsmodul zum Kontrollieren eines abgerissenen Kabels und ein Entriegelungsmodul zum Entriegeln eines Kabel-Klemm-Mechanismus auf. Das im Innern des Kabel-Verlegewerkzeuges von einer vorhergehenden Verlegearbeit abgeschnittene Kabel wird bei gleichzeitigem Entriegeln des Kabel-Klemm-Mechanismus mit dem Vorschubmodul vorgeschoben, bis es in einer gewünschten Länge gegenüber dem Verlegewerkzeug vorsteht. Es wird mit seinem vorstehenden Ende von einem Halteschlitz einer Stecker-Verlegehilfe festgeklemmt, welche hinter jeder Aufnahmehalterung 8 fest auf dem Verlegebrett 6 aufgebaut ist und kammartig angeordnete Halteschlitze aufweist, in der gleichen Anzahl und Teilung, wie das Kabel-Verbindungsteil 18 Anschlüsse hat, und nach einem dem aufgelegten Verlegebrett entsprechenden Programm zwischen den einzelnen Kabelverbindungsteilen 18 bzw. den Stecker-Verlegehilfen endlos hin- und herverlegt. Bei Richtungsänderungen dient eine weitere, fest mit dem Verlegebrett 6 verbundene Verlegehilfe 7 mit einer Anzahl Umlenkstifte, um die die Kabelstränge beim Verlegen gelenkt werden. Sobald der Kabelbaum verlegt ist, trennt das Ablängmodul im Verlegewerkzeug das Kabel und der Kabel-Klemm-Mechanismus sichert das Kabel im Innern des Kabel-Verlegewerkzeuges vor dem weiteren Zurückziehen des Kabels. Der Schwenkarm 2 setzt das Kabel-Verlegewerkzeug 4 im Werkzeugmagazin 3 ab und der Greifer 2.1 ergreift ein Abbindwerkzeug, mit dem der Kabelbaum 12 an allen vorbestimmten Stellen abgebunden wird. Mit einem weiteren Press- und Schneidewerkzeug werden in einem Arbeitsgang die in die Kabelverbindungsteile 18 eingelegten Kabel in die Schneidklemmverbindungen zur Herstellung einer Kontaktverbindung eingepresst und die zwischen den Kabelverbindungsteilen 18 und den kammartigen Verlegehilfen gebildeten Kabelumlenkungen abgetrennt. Mit Hilfe der automatischen elektrischen Schlusskontrolle werden alle Anschlüsse geprüft und eine Kurzschluss-Prüfung durchgeführt. Anschliessend wird der Transportbandantrieb 19 eingeschaltet und die Wippe 21 mit Hilfe des Kippantriebes 23 in die entsprechende Lage für "GUT" oder "AUSSCHUSS" geneigt. Mit einem weiteren Werkzeug werden die Aufnahmehalterungen 8 für die Kabelverbindungsteile 18 nacheinander entriegelt, und gleichzeitig mit Hilfe einer am Werkzeug angeordneten Düse 29 einer Absaugvorrichtung 30 alle abgetrennten Kabelstücke abgesaugt. Ein vom Greifer 2.1 des Schwenkarmes 2 des Industrieroboters 1 ergriffenes Greiferwerkzeug fasst den freigesetzten Kabelbaum 12 und hebt ihn gemeinsam mit der durch die pneumatischen Kolben-Zylindereinheiten angehobenen Abstreiferplatte 13 aus dem Bereich der Verlegehilfen 7, um den Kabelbaum 12 über die nun glatte Ebene der Abstreiferplatte 13 auf das Transportband 20 zu schieben, von wo er automatisch über die vom Kippantrieb 23 in die entsprechende Neigung bewegte Wippe 21 in den richtigen Transportbehälter 24, 25 rutscht. Die Abstreiferplatte 13 senkt sich anschliessend wieder auf das Verlegebrett 6 und in der gleichen oben beschriebenen Reihenfolge kann ein weiterer, genau gleicher Kabelbaum 12 gefertigt werden. Es kann aber auch ein neues Verlegebrett mit einer zugehörigen Abstreiferplatte auf den Werktisch aufgelegt werden, um mit Hilfe eines entsprechenden neuen Programmes einen neuen Kabelbaum, ähnlich wie oben beschrieben, zu fertigen.

Um zu verhindern, dass beim Auswechseln eines Verlegebrettes für die Fabrikation eines neuen Kabelbaumes eventuell nicht abgesaugte Arbeitsrückstände zwischen den Werktisch und das Verlegebrett gelangen können, sind unter dem Verlegebrett entsprechende, in der Höhe einstellbare Positionsfüsse vorgesehen, welche das Verlegebrett vom Werktisch leicht distanzieren und gleichzeitig eine für eine einwandfreie Fabrikation erforderliche genaue Arbeitshöhe des Verlegebrettes auf dem Werktisch ergeben. Ebenso kann zwischen dem Verlegebrett und der Abstreiferplatte anstelle einer flächigen Auflage beispielsweise mit Hilfe von an den Positionsstiften 28 angeordneten Ansätzen 28.1 ebenfalls ein freier Zwischenraum geschaffen werden.

Anstelle der in obiger Beschreibung vorgesehenen Positionsstifte für die Zentrierung der Abstreiferplatte und der unter der gegenüber dem Verlegebrett vorstehenden Abstreiferplatte angreifenden Hubkolben der Kolben-Zylindereinheiten ist es denkbar, die Zentrierung und die Hubbewegung der Abstreiferplatte allein durch die Hubkolben der Kolben-Zylindereinheiten vorzunehmen, wobei die Hubkolben 16 konisch ausgebildete, in passende Aussparungen der Abstreiferplatte 13 eingreifende Endstücke 16.1 aufweisen und durch Gleitführungen 31 geführt sind.

**Patentansprüche**

1. Einrichtung für eine vollautomatische Kabelbaumherstellung, bestehend aus einem Werktisch (5) mit einem darauf aufgebauten, durch eine elektronische Steuereinheit gesteuerten Industrieroboter (1), welcher einen Schwenkarm (2) mit einem Greifer (2.1) zum Aufnehmen von Werkzeugen (4) für die Verlegung von Kabelverbindungsteilen (18) aufweist, aus mindestens einem am Werktisch (5) angeordneten Magazin (17) für die automatische Zuführung von Kabelverbindungsteilen (18), aus einer Vorrichtung für die Zuführung von Kabelsträngen, aus einer Einrichtung (6) für die Halterung der Kabelverbindungsteile (18) auf dem Werktisch (5), aus einer elektrischen Kabelbaum-Prüfeinrichtung und aus einer Kabelbaum-Transport- und- Sortiereinrichtung (19, 20, 21, 23),
**dadurch gekennzeichnet,**
dass die Einrichtung für die Halterung von Kabel-Verbindungsteilen (18) ein austauschbares Verlegebrett (6) mit fest aufgebauten Verlegehilfen (7) und Aufnahmehalterungen (8) für die Kabel-Verbindungsteile (18) ist, dass jede Aufnahmehalterung (8) die für eine elektrische Nachkontrolle nötigen Verbindungsleitungen und Kontaktbrücken aufweist, dass auf dem Verlegebrett (6) eine in der Ruhelage darauf aufliegende, durch eine Hubvorrichtung (15) in eine die Verlegehilfen (7) überragende Arbeitslage bewegbare, Aussparungen (13.1) für die Verlegehilfen (7) und die Aufnahmehalterungen (8) für Kabel-Verbindungsteile (18) aufweisende Abstreiferplatte (13) angeordnet ist, wobei die Kabelstränge mittels eines vom Greifer (2.1) des Schwenkarmes (2) gefassten, eine Ablängvorrichtung aufweisenden Verlegewerkzeuges und der Verlegehilfen (7) auf dem Verlegebrett (6) verlegbar sind.

2. Einrichtung nach Anspruch 1,
**dadurch gekennzeichnet,**
dass auf zwei gegenüberliegenden Seiten (6.3, 6.4) des Verlegebrettes (6) je mindestens ein Traglappen (14) angeordnet ist.

3. Einrichtung nach Anspruch 1,
**dadurch gekennzeichnet,**
dass am Verlegebrett (6) mindestens zwei die Abstreiferplatte (13) in der vertikalen Bewegungsrichtung zentrierende Positionsstifte (28) angeordnet sind.

4. Einrichtung nach Anspruch 3,

**dadurch gekennzeichnet,**
dass der Positionsstift (28) einen die Abstreiferplatte (13) vom Verlegebrett (6) distanzierenden Ansatz (28.1) aufweist.

5. Einrichtung nach Anspruch 1,
**dadurch gekennzeichnet,**
dass die Hubvorrichtung aus am Rahmen (5.5) des Werktisches (5) angeordneten pneumatischen Kolben-Zylindereinheiten (15) besteht, wobei der Hubkolben (16) der Kolben-Zylindereinheit (15) unter der gegenüber dem Verlegebrett (6) vorstehenden Abstreiferplatte (13) angreift.

6. Einrichtung nach Anspruch 5,
**dadurch gekennzeichnet,**
dass der Hubkolben (16) durch eine Gleitführung (31) geführt ist und ein konisch ausgebildetes, in eine passende Aussparung der Abstreiferplatte (13) eingreifendes Endstück (16.1) aufweist.

7. Einrichtung nach Anspruch 1,
**dadurch gekennzeichnet,**
dass das Verlegebrett (6) zwei Aussparungen (6.2) aufweist, die zwei auf dem Werktisch (5) angeordnete, mit konischem Führungsansatz (9.1) versehene Positionszapfen (9) passend aufzunehmen vermögen.

8. Einrichtung nach Anspruch 1,
**dadurch gekennzeichnet,**
dass an der Unterseite des Verlegebretts (6) in der Höhe einstellbare Positionsfüsse (11) angeordnet sind.

9. Einrichtung nach Anspruch 1,
**dadurch gekennzeichnet,**
dass an einem vom Greifer (2.1) des Schwenkarmes (2) des Industrieroboters (1) aufgenommenen Werkzeug (4) eine Arbeitsrückstände absaugende Düse (29) einer Absaugvorrichtung (30) angeordnet ist.

**Claims**

1. Equipment for a fully automatic production of a cable harness and consisting of a worktable (5) with an industrial robot (1), which is built up thereon, is controlled by an electronic control unit and which comprises a pivotal arm (2) with a gripper (2.1) for the reception of tools (4) for the positioning of cable-connecting parts (18), of at least one magazine (17) arranged at the worktable (5) for the automatic feeding of cable-connecting parts (18), of a device for the feeding of cable strands, of an equipment (6) for the retention of the cable-connecting parts (18) on the worktable (5), of an electrical cable harness testing equipment and of a cable harness transporting and sorting equipment (19, 20, 21, 23), characterised thereby, that the equipment for the retention of cable-connecting parts (18) is an exchangeable positioning board (6) with fixedly built-up positioning aids (7) and receiving mounts (8) for the cable-connecting parts (18), that each receiving mount (8) comprises the connecting lines and contact bridges necessary for a final electrical check and that a stripper plate (13), which displays recesses (13.1) for the positioning aids (7) and the receiving mounts (8) for cable-connecting parts (18), is arranged on the positioning board (6), rests thereon in the rest position and is movable by a lifting device (15) into a working position protruding above the positioning aids (7), wherein the cable strands are positionable on the positioning board (6) by means of the positioning aids (7) and a positioning tool which is gripped by the gripper (2.1) of the pivotal arm (2) and comprises a device for cutting to length.

2. Equipment according to claim 1, characterised thereby, that at least one support tab (14) is arranged on each of two opposite sides (6.3, 6.4) of the positioning board (6).

3. Equipment according to claim 1, characterised thereby, that at least two positioning pins (28), which centre the stripper plate (13) in the vertical direction of movement, are arranged at the positioning board (6).

4. Equipment according to claim 1, characterised thereby, that the positioning pin (28) comprises a projection (28.1), which spaces the stripper plate (13) from the positioning board (6).

5. Equipment according to claim 1, characterised thereby, that the lifting device consists of pneumatic piston-cylinder units (15) arranged at the frame (5.5) of the worktable (5), wherein the lifting piston (16) of the piston-cylinder unit (15) engages below the stripper plate (13) protruding over the positioning board (6).

6. Equipment according to claim 5, characterised thereby, that the lifting piston (16) is guided by a sliding guide (31) and comprises a conically shaped end member (16.1) engaging into a fitting recess of the stripper plate (13).

7. Equipment according to claim 1, characterised thereby, that the positioning board (6) displays two recesses (6.2), which are capable of fittingly receiving two position spigots (9), which are arranged on the worktable (5) and each provided with a conical guide projection (9.1).

8. Equipment according to claim 1, characterised thereby, that positioning feet (11) of adjustable height are arranged at the underside of the positioning board (6).

9. Equipment according to claim 1, characterised thereby, that a nozzle (29), which sucks away work residues, of a suction device (30) is arranged at a tool (4) received by the gripper (2.1) of the pivotal arm (2) of the industrial robot (1).

**Revendications**

1. Dispositif pour une fabrication entièrement automatique de faisceaux de câbles, composé d'une table porte-pièce (5) comportant, monté sur elle, un robot industriel (1) commandé par une unité de commande électronique et possédant un bras pivotant (2) muni d'un organe préhenseur (2.1) destiné à prendre des outils (4) en vue de la pose d'éléments de liaison de câbles (18), d'un ou plusieurs magasins (17), disposés au niveau de la table porte-pièce (5) et destinés à l'alimentation automatique en éléments de liaison de câbles (18), d'un dispositif pour l'alimentation en tronçons de câbles, d'un dispositif (6) pour maintenir les éléments de liaison de câbles (18) sur la table porte-pièce (5), d'un dispositif électrique de contrôle de faisceaux de câbles et d'un dispositif de transport et de tri de faisceaux de câbles (19, 20, 21, 23), caractérisé en ce que le dispositif prévu pour maintenir des éléments de liaison de câbles (18) est une plaque de pose remplaçable (6) comportant, montés sur elle de façon fixe, des éléments auxiliaires de pose (7) et des supports de réception (8) pour les éléments de liaison de câbles (18), en ce que chaque support de réception (8) possède les lignes de raccordement et les ponts de contact nécessaires à un contrôle électrique ultérieur, et en ce qu'il est prévu, sur la plaque de pose (6), une plaque d'enlèvement (13) posée sur celle-ci, en position de repos, apte à être amenée par un dispositif de levage (15) dans une position de travail dépassant des éléments auxiliaires de pose (7), et possédant des évidements (13.1) pour les éléments auxiliaires de pose (7) et les supports de réception (8) prévus pour les éléments de liaison de câbles (18), les tronçons de câbles étant aptes à être posés sur la plaque de pose (6) à l'aide d'un outil de pose qui est saisi par l'organe préhenseur (2.1) du bras pivotant (2) et possède un dispositif de mise à longueur, et à l'aide des éléments auxiliaires de pose (7).

2. Dispositif selon la revendication 1, caractérisé en ce qu'il est prévu, sur chacun des deux côtés opposés (6.3, 6.4) de la plaque de pose (6), une ou plusieurs pattes de support (14).

3. Dispositif selon la revendication 1, caractérisé en ce qu'il est prévu, au niveau de la plaque de pose (6), au moins deux chevilles de positionnement (28) qui centrent la plaque d'enlèvement (13) dans le sens de déplacement vertical.

4. Dispositif selon la revendication 3, caractérisé en ce que la cheville de positionnement (28) possède une pièce ajoutée (28.1) qui maintient un écartement entre la plaque d'enlèvement (13) et la plaque de pose (6).

5. Dispositif selon la revendication 1, caractérisé en ce que le dispositif de levage se compose d'unités pneumatiques à piston-cylindre (15) disposées au niveau du bâti (5.5) de la table porte-pièce (5), le piston de levée (16) de l'unité à piston-cylindre (15) venant en prise sous la plaque porte-pièce (13) faisant saillie par rapport à la plaque de pose (6).

6. Dispositif selon la revendication 5, caractérisé en ce que le piston de levée (16) est guidé par une glissière (31) et possède une extrémité (16.1) de configuration conique venant en prise dans un évidement correspondant de la plaque d'enlèvement (13).

7. Dispositif selon la revendication 1, caractérisé en ce que la plaque de pose (6) possède deux évidements (6.2) qui peuvent recevoir de façon ajustée deux tourillons de positionnement (9) disposés sur la table porte-pièce (5) et pourvus d'une extrémité de guidage conique (9.1).

8. Dispositif selon la revendication 1, caractérisé en ce qu'il est prévu, au niveau de la face inférieure de la plaque de pose (6), des pieds de positionnement (11) réglables en hauteur.

9. Dispositif selon la revendication 1, caractérisé en ce qu'il est prévu, au niveau d'un outil (4) pris par l'organe préhenseur (2.1) du bras pivotant (2) du robot industriel (1), une buse (29) d'un dispositif d'aspiration (30) qui aspire des résidus de l'opération.

# Fig.1

# Fig.2

# Fig. 3

# Fig. 4